# EUROPEAN PATENT APPLICATION

(11) **EP 1 842 423 A1**
(43) Date of publication of application: **10.10.2007**
(21) Application number: 07003259.4
(22) Date of filing: 15.02.2007
(51) Int. Cl.: A01K 63/00, A01K 63/06

(54) **Ornamental containers and preparation thereof**

(30) Priority: 07.04.2006 CN 200610072680
(71) Applicant: Taikong Corp., Nangang, District Taipei City 115,Taiwan, R.O.C. (TW)
(72) Inventor: Fang, Willis, Taipei City 115 (TW)
(74) Representative: Wagner, Bernhard Peter

(57) **Abstract**

This invention provides an ornamental container comprising (a) a container, consisting of transparent or semi-transparent materials, and (b) ornamental objects, comprising objects or patterns for projecting on the surface of the container.

This invention further provides a method of manufacture which comprises placing objects or patterns on the surface of the transparent or semi-transparent container.

## Description

### FIELD OF THE INVENTION

The present invention relates to an ornamental container and the method of manufacture. Specifically speaking, the invention improves the color of the container as a whole and the delight when enjoying the sight by using other vivid patterns or light.

### BACKGROUND OF THE INVENTION

In the present era, the living style is changing all the time along with economical and technical transition. The demand for the quality life also increases. Nowadays, as the number of pet owners increase, domestic ornaments such as containers for pets, including fish bowls, are turning into a new fashion of domestic decoration. Due to limited living spaces, small and elaborate fish bowls are getting more and more popular. In addition to housing decorations, ornamental containers are also brand-new products of gift market. Not only they fit to the market demand, but also open another door for product sale.

However, the ornamental containers on present market are mostly containers filled with infilling materials at the bottom or containers with different shapes and colors for ornamental delights. However, the infilling materials may cause secondary pollution in the containers, influencing the microenvironment. It also requires more time and money to replace the infilling materials regularly.

In addition, water plants used in present ornamental containers are mostly green, not as colorful as terrestrial plants. The marine blue often brings consumers the sensation for being close to the ocean. Nevertheless, fishing bowls at present can not provide the sensation mentioned above.

### BRIEF DESCRIPTION OF DRAWINGS

Figure 1(a) shows the ornamental container of pressed flowers of the present invention.

Figure 1(b) shows the characteristics of the pressed flowers pattern with a blue LED light and the swimming fish placed in the container.

Figure 2(a) shows the pattern of the earth shape directly painted on the container.

Figure 2(b) shows the earth image projected at the bottom of the container rack with a blue LED lamp illumination.

The illustration of the main components:
10: container
20: ornamental objects
30: gumming material
40: projecting lamp
50: the container rack

### SUMMARY OF THE INVENTION

This invention provides an ornamental container comprising (a) a container, consisting of transparent or semi-transparent materials, and (b) ornamental objects, comprising objects or patterns for projecting on the surface of the container.

This invention further provides a method of manufacture which comprises placing objects or patterns on the surface of the transparent or semi-transparent container.

### DETAILED DESCRIPTION OF THE INVENTON

The present invention relates to an ornamental container, comprising:
(a) a container, consisting of transparent or semi-transparent materials, and
(b) ornamental objects, comprising objects or patterns for projecting on the surface of the container.

In preferred embodiments, the container of the invention further comprises articles selected from the following group:
(a) gumming material,
(b) projecting lamp,
(c) a rack of the container, or
(d) hangers, for example, links.

The term" gumming material" as used herein, refers to the material that can bind ornamental objects and the container for fixation and keep hues and shapes of the patterns.

The term" projecting lamp" as used herein, refers to the lamp at the top or on the side of the container. When illuminating from the side or the top, the pattern can be presented.

The term" rack of the container" as used herein, refers to a rack located under the container. It can show the varieties of the pattern by raising the container.

The term" hanger" as used herein, refers to an object with which the container can be hanged on any places, for example, a wall.

The shape of the present invention can be generally in any shape or form. More suitable shapes are animal model (for example, ducks, bears, dogs, and cats), cubes, or spheres. The material of the container is generally selected from transparent or non-transparent materials, but glass, organic glass or glass reinforced plastic is more suitable, especially organic glass. The gumming material used on the surface of the container are included but not limited to transparent gel, acrylic gel, epoxy resin (for example, jelly gel), glass, organic glass, or glass reinforced plastic.

Generally ornamental objects used on the surface of the container are objects or patterns. In preferred embodiments, the objects are any objects that can be bound to the surface of the container and are selected from the group consisting of dry pressed flowers, figures of marine life, sea sands, ornamental stones, sections of shells, figures of terrestrial organisms, figures of galaxies, figures of the earth, glass products and portraits, especially dry pressed flowers, figures of marine life, figures of galaxies, and glass products. As to patterns, the patterns are shapes of objects directly painted on the surface of the container, and the objects are selected from the group consisting of galaxies, diversified ecological features, and geographical features, especially galaxies or geographical features.

The wavelength of the projecting lamp in the present invention is from 300 nm to 800 nm. It's more suitable from 400 nm to 700 nm. It's much preferred from 350 to 500 nm. It's the most suitable with 470 nm.

Generally, any organisms including terrestrial or marine life, virtual life, or other things such as paster or pencils, can be placed into the ornamental container of the invention. More suitable things placed into it are any marine life. Thus the present invention has the characteristics of improving entire sensation of color, the ecological education, and the ornamental delights. The container can be put in any places, such as a room, an office, a box of KTV, a lounge bar, a hotel, a conference hall, an exhibition, or other public places.

The present invention also provides a method of manufacture which comprises placing objects or patterns on the surface of the transparent or semi-transparent container.

In a more preferred embodiment, the method further comprises binding the surface objects or patterns with a layer of gumming materials to fix the objects or the patterns on a specific location, or illuminating from top to bottom with one or more projecting lamps above the container.

Generally, the transparent or semi-transparent materials of the method can be selected from any transparent or non-transparent materials, glass, organic glass, and glass reinforced plastic, especially organic glass. Modeling on the surface of the container is common objects or patterns, and the objects are any objects that can be bound to the surface of the container and are selected from the group consisting of dry pressed flowers, figures of marine life, sea sand, ornamental stones, sections of shells, figures of terrestrial organisms, figures of galaxies, figures of the earth, glass products and portraits, especially dry pressed flowers, figures of marine life, figures of galaxies, or glass products. As to patterns, the patterns are shapes of objects directly painted on the surface of the container, and the objects are selected from the group consisting of galaxies, diversified ecological features, and geographical features, especially galaxies or geographical features.

The gumming material of the method used on the surface of the container is for installing the objects or patterns. The material fixes the objects or patterns on the specific location tightly by combining of the gumming material and the container. The gumming material is usually transparent gel, acrylic gel, epoxy resin (for example, jelly gel), glass, organic glass, or glass reinforced plastic.

The term "specific location" as used herein refers to the whole or partial surface of the container. The surface involves all facets of the container an observer can view as board as possible. More suitable locations are the four facets of the container, and the surface is the four facets that an observer always views. A much more suitable location is one facet of the surface of the container, and the facet is the one that an observer always views.

### EXAMPLE

Example 1:

A cubic container 10 was taken and then one or more pressed flowers 20 were installed on certain surface. The pressed flowers 20 were fixed on the surface of the glass with an additional layer of transparent glass and gumming materials or gel 30, for example, acrylic gel. After the gumming materials 30 were dried, the ornamental container 10 with the pressed flowers was finished.

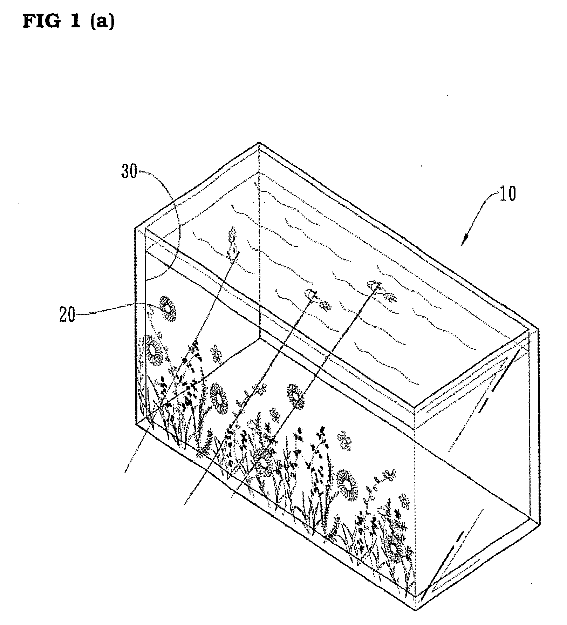

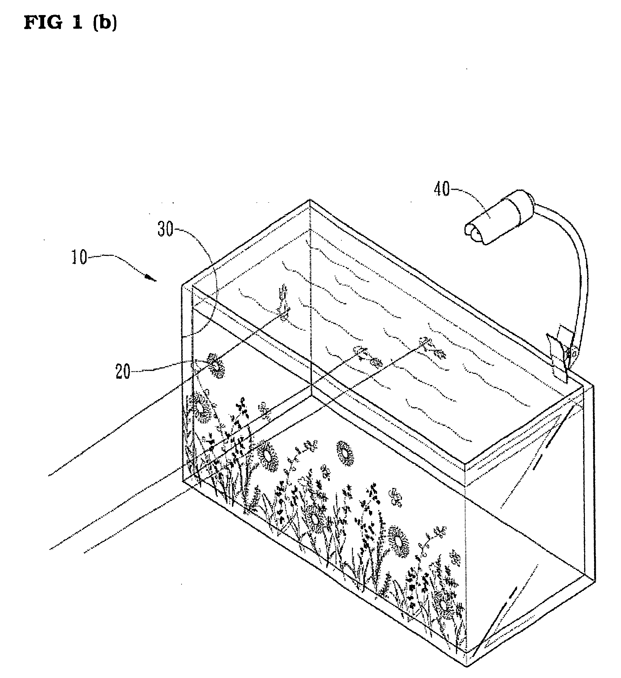

Figure 1(a) showed one example of the invention. As shown in the figure, the ornamental container 10 was made of a container, the pressed flowers 20, and an additional layer of transparent glass.

Figure 1 (b) showed another example of the invention. As shown in the figure, based on the pattern of the container of figure 1 (a), another set of blue LED lamp 40 was set up, and the characteristics of the pressed flowers 20 and the swimming of the fish were presented with the illumination of blue LED lamps 40.

Example 2:
A spherical container 10 was taken and the earth shape 20 was directly painted on the surface of the container 10. Then the container 10 was suspended in midair with a container rack 50. A detachable set of blue LED lamps 40 was set up above the container 10, and the earth shape 20 was projected at the place where the container was placed to present an image of the earth with the illumination from top to bottom. Additionally, the image of the earth was much clear by refraction of water in the container 10.

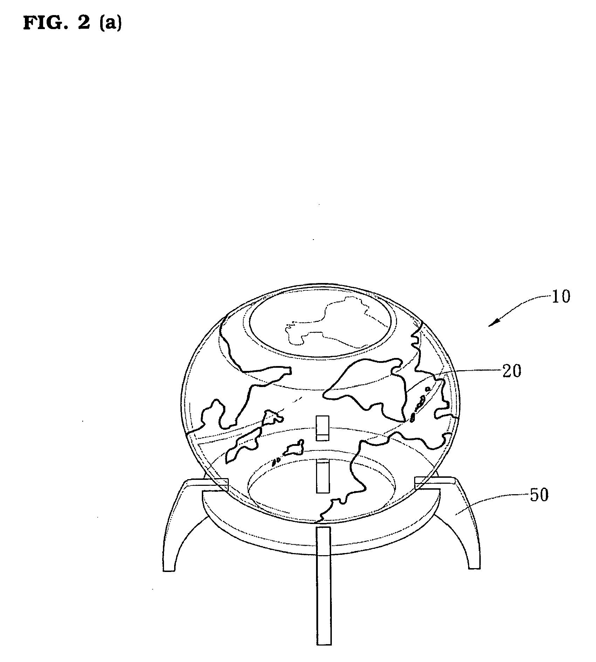

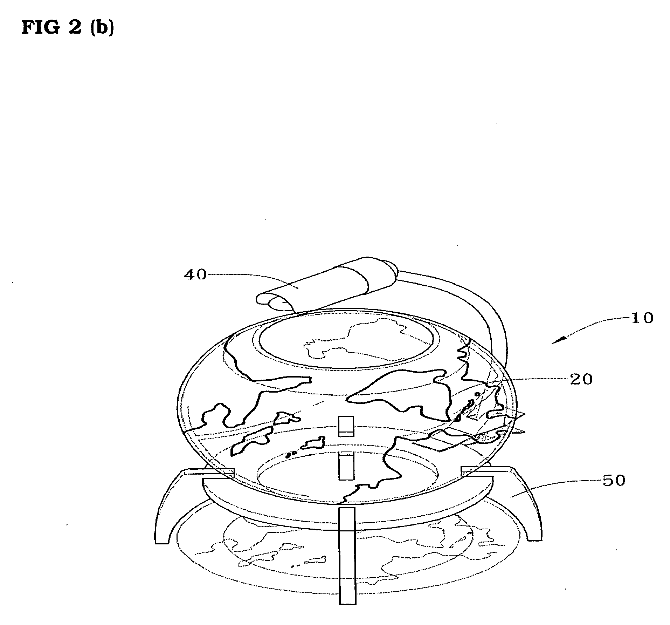

Figure 2(a) showed an example of the invention. Raising the container 10 with a container rack 50, the earth shape 20 directly painted on the surface of the container showed not only ornamental but educational usage.

Figure 2(b) showed another example of the invention. As shown in the figure, based on the pattern of the container 10 of the figure 2(a), another set of the blue LED lamps 40 was set up, and the earth shape 20 was projected below the bottom of the container forming an image of the earth with the blue LED lamps 40 illumination.

## Claims

1. An ornamental container comprises:
(a) a container, consisting of transparent or semi-transparent materials, and
(b) ornamental objects, comprising objects or patterns for projecting on the surface of the container.

2. The container of the claim 1, wherein the container further comprises articles selected from the following group:
(a) gumming material, which can bind ornamental objects and the container for fixation and keep hues and shapes of the patterns,
(b) projecting lamp placed at the top or on the side of the container, which illuminates from the side or the top to present the pattern,
(c) a rack under the container, which can show the varieties of the pattern by raising the container, and
(d) hangers, with which the container can be hanged on any places .

3. The container of claim 2, wherein the hangers are links and the place is a wall.

4. The container of claim 1, wherein the shape of the container is animal model, a cube or a sphere.

5. The container of claim 1, wherein the material of the container is selected from the group consisting of glass, organic glass, and glass reinforced plastic.

6. The container of claim 2, wherein the gumming material is selected from the group consisting of transparent gel, acrylic gel, epoxy resin, glass, organic glass, and glass reinforced plastic.

7. The container of claim 1, wherein the objects comprise any objects that can be bound to the surface of the container and are selected from the group consisting of dry pressed flowers, figures of marine life, sea sand, ornamental stones, sections of shells, figures of terrestrial organisms, figures of galaxies, figures of the earth, glass products and portraits.

8. The container of claim 1, wherein the patterns comprises shapes of objects directly painted on the surface of the container, which are selected from the following group: galaxies, diversified ecological features, and geographical features.

9. The container of claim 2, wherein the wavelength of the projecting lamp is from 300 nm to 800 nm.

10. The container of claim 9, wherein the wavelength of the projecting lamp is 470 nm.

11. The container of claim 1, wherein the container can be used for housing organisms or virtual life.

12. The container of claim 11, wherein the organisms are selected from any terrestrial or marine organisms.

13. The container of claim 1, wherein the container provides the improvement of the entire sensation of the colors, ecological education, and ornamental delights.

14. The container of claim 1, wherein the container can be placed in any places, for example, in a room, in an office, in a box of KTV, in a lounge bar, in a hotel, in a conference hall, in an exhibition, or in other public places.

15. A method of manufacture which comprises placing objects or patterns on the surface of the transparent or semi-transparent container.

16. The method of claim 15, wherein the method further comprises binding the surface objects or patterns to a layer of gumming materials to fix the objects or the patterns on a specific location, or illuminating from top to bottom with one or more projecting lamps above the container.

17. The method of claim 16, wherein the gumming material comprises transparent gel, acrylic gel, epoxy resin, glass, organic glass, or glass reinforced plastic.

18. The method of claim 15, wherein the objects that can be bound to the surface of the container and are selected from the group consisting of dry pressed flowers, figures of marine life, sea sand, ornamental stones, sections of shells, figures of terrestrial organisms, figures of galaxies, figures of the earth, glass products and portraits.

19. The method of claim 15, wherein the patterns comprise shapes of objects directly painted on the surface of the container, which are selected from the group consisting of galaxies, diversified ecological features, and geographical features.

20. The method of claim 16, wherein the specific location comprises the whole or partial surface of the container.
